# EUROPEAN PATENT APPLICATION

(11) **EP 4 354 887 A1**
(43) Date of publication of application: **17.04.2024**
(21) Application number: 21945256.2
(22) Date of filing: 07.06.2021
(51) Int. Cl.: H04N 21/472, H04N 21/854, H04N 21/482, H04N 21/431, H04N 21/2743

(54) **ARTIFICIAL INTELLIGENCE DEVICE, AND METHOD FOR OPERATING ARTIFICIAL INTELLIGENCE DEVICE**

(71) Applicant: LG Electronics Inc., Yeongdeungpo-gu Seoul 07336 (KR)
(72) Inventor: KIM, Yejin, Seoul 06772 (KR); OH, Jinsoo, Seoul 06772 (KR); YOO, Sungeun, Seoul 06772 (KR); LEE, Junwoo, Seoul 06772 (KR)
(74) Representative: Schornack, Oliver
(86) International application number: PCT/KR2021/007064
(87) International publication number: WO 2022/260188

(57) **Abstract**

The present disclosure provides an artificial intelligence device comprising: a communication unit for communicating with the outside; an input/output unit for receiving a signal from a user and outputting a process result; and a control unit. The control unit: outputs a conversational interface for conversation with the user when the user accesses a video editing system; receives, through the conversational interface, a video uploaded by the user; outputs, through the conversational interface, a conversation for editing the video; extracts, from the conversation, a keyword for editing the video; and edits the video on the basis of the extracted keyword.

## Description

### [Technical Field]

The present disclosure relates to an artificial intelligence device, and more particularly to an artificial intelligence device that edits videos uploaded by a user through an interactive interface.

### [Background Art]

Recent technology fields such as artificial intelligence, IoT, cloud computing, and big data are converging and pushing the world into the fourth industrial revolution.

Here, artificial intelligence is a computer program that artificially implements human learning, reasoning, perception, and other abilities, or a computer system including the same. The artificial intelligence technology is already being used in various fields.

In particular, artificial intelligence devices can receive commands by voice and have dialogs. In this regard, the speech recognition service utilizes a massive database to select the best answer to the user's question. The voice search function is to convert the input voice data into text, analyzes the text, and sends real-time search results back to the device by a cloud server. The cloud server has the computing power to classify numerous words into voice data categorized by gender, age, and accent, store them, and process them in real time. As more voice data is accumulated, voice recognition will become more accurate, reaching human parity.

Additionally, recently, in the "non-contact" era, the number of people aiming to become beginner creators has been increasing. In addition, it is common for general users who enjoy SNS to edit videos they have shot in order to share videos with others.

However, video editing requires specialized knowledge and an understanding of complex programs, and thus ordinary people without specialized knowledge do not have easy access to video editing in reality.

Therefore, there is a need for easy-to-use video editing technology that meets the user's intentions.

### [Disclosure]

### [Technical Problem]

The present disclosure is directed to address the above-described issues and others issues.

An object of the present disclosure is to edit video by reflecting the user's intention through an interactive interface.

### [Technical Solution]

In one aspect of the present disclosure, provided herein is an artificial intelligence device including a communication unit configured to communicate with an outside, an input/output (I/O) unit configured to receive a signal from a user and output a processing result, and a controller. The controller may be configured to, based on an image editing system being accessed by the user, output an interactive interface for a dialog with the user, receive images uploaded by the user through the interactive interface, output a dialog about editing of the images through the interactive interface, extract, from the dialog, a keyword for editing of the images, and edit the images based on the extracted keywords.

In one embodiment of the present disclosure, based on accessing the image editing system by the user, the controller may receive information about the user and outputs, based on the information about the user, the dialog about editing of the images through the interactive interface.

In one embodiment of the present disclosure, the controller may output, through the interactive interface, a dialog about at least one editing function for editing of the images, wherein the editing function may include a cut editing function, a mosaic processing function, a background music (BGM) input function, and a filter change function.

In one embodiment of the present disclosure, based on a dialog about a first editing function being received from the user, the controller may extract a keyword from the dialog about the first editing function.

In one embodiment of the present disclosure, the controller may output, through the interactive interface, a dialog about confirmation of a keyword for the first editing function.

In one embodiment of the present disclosure, based on a dialog about a second editing function being received from the user after extracting the keyword from the dialog about the first editing function, the controller extracts a keyword from the dialog about the second editing function.

In one embodiment of the present disclosure, the controller may output a dialog for confirmation of the keyword for the first editing function and the keyword for the second editing function through the interactive interface.

In one embodiment of the present disclosure, the controller may share, through the interactive interface, a preview image for the images to be edited based on the keyword with the user.

In one embodiment of the present disclosure, the controller may share the edited images with the user through the interactive interface.

In one embodiment of the present disclosure, the controller may receive feedback from the user after sharing the edited images with the user.

In one embodiment of the present disclosure, the controller may re-edit the edited images based on the received feedback.

In one embodiment of the present disclosure, the controller may store the received feedback.

In one embodiment of the present disclosure, the controller may output at least one of an advertisement or preconfigured information through the interactive interface while editing the images.

In one embodiment of the present disclosure, in editing the images based on the extracted keyword, the controller may edit the images through the communication unit using an external server.

In one embodiment of the present disclosure, the artificial intelligence device may further include a memory, wherein the controller may store the edited images in the memory.

In one embodiment of the present disclosure, the controller may edit the images using artificial intelligence technology.

In another aspect of the present disclosure, provided herein is a method of operating an artificial intelligence device. The method may include, based on an image editing system being accessed by a user, outputting an interactive interface for a dialog with the user, receiving images uploaded by the user through the interactive interface, outputting a dialog about editing of the images through the interactive interface, extracting, from the dialog, a keyword for editing of the images, and editing the images based on the extracted keywords.

### [Advantageous Effects]

The mobile terminal and the control method therefor according to the present disclosure provide the following effects.

According to at least one of the embodiments of the present disclosure, the video may be edited based on the user's intention.

According to at least one of the embodiments of the present disclosure, the video may be edited through an interactive interface, and therefore users can edit the video without specialized skills.

According to at least one of the embodiments of the present disclosure, a user may be allowed to easily edit the video by applying existing editing functions.

Further scope of applicability of the present disclosure will become apparent from the following detailed description.

Various changes and modifications within the spirit and scope of the present disclosure will be apparent to those skilled in the art, and therefore the detailed description and specific embodiments, such as preferred embodiments of the present disclosure, should be understood to be given by way of example only.

### [Description of Drawings]

FIG. 1 is a block diagram illustrating a terminal.
FIG. 2 is a block diagram illustrating a configuration of a leaning device for an artificial neural network according to one embodiment of the present disclosure.
FIG. 3 is a diagram illustrating a speech system according to one embodiment of the present disclosure.
FIG. 4 is a diagram illustrating a procedure of extracting features of a user's utterance from a speech signal according to one embodiment of the present disclosure.
FIG. 5 is a diagram illustrating an example of converting a speech signal into a power spectrum according to one embodiment of the present disclosure.
FIG. 6 is a diagram illustrating an artificial intelligence device according to one embodiment of the present disclosure.
FIG. 7 is a diagram illustrating an artificial intelligence device according to another embodiment of the present disclosure.
FIG. 8 is a diagram illustrating an artificial intelligence device, an input/output device, and a server according to another embodiment of the present disclosure.
FIG. 9 is a flowchart illustrating operations performed by a controller of an artificial intelligence device according to one embodiment of the present disclosure.
FIG. 10 is a flowchart illustrating operations performed by a controller of a server according to one embodiment of the present disclosure.
FIG. 11 is a flowchart illustrating operations performed by a controller of an artificial intelligence device according to another embodiment of the present disclosure.
FIG. 12 is a diagram illustrating an image editing scenario according to one embodiment of the present disclosure.
FIG. 13 is a diagram illustrating an example of uploading images by an image editing system according to one embodiment of the present disclosure.
FIG. 14 is a diagram illustrating an example of a cut editing function in an image editing system according to one embodiment of the present disclosure.
FIG. 15 is a diagram illustrating an example of a mosaic processing function in an image editing system according to one embodiment of the present disclosure.
FIG. 16 is a diagram illustrating an example of a BGM insertion function in an image editing system according to one embodiment of the present disclosure.
FIG. 17 is a diagram illustrating an example of a filter change function in an image editing system according to one embodiment of the present disclosure.
FIG. 18 is a diagram illustrating an example of editing or additional editing by an image editing system according to one embodiment of the present disclosure.
FIG. 19 is a diagram illustrating an example of receiving feedback by an image editing system according to one embodiment of the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Artificial Intelligence (AI) refers to a field that studies artificial intelligence or methodology capable of achieving artificial intelligence. Machine learning refers to a field that defines various problems handled in the AI field and studies methodology for solving the problems.

In addition, AI does not exist on its own, but is rather directly or indirectly related to other fields in computer science. In recent years, there have been numerous attempts to introduce an AI element into various fields of information technology to use AI to solve problems in those fields.

Machine learning is an area of AI including the field of study that assigns the capability to learn to a computer without being explicitly programmed.

Specifically, machine learning may be a technology for researching and constructing a system for learning based on empirical data, performing prediction, and improving its own performance and researching and constructing an algorithm for the system. Algorithms of machine learning take a method of constructing a specific model in order to derive prediction or determination based on input data, rather than performing strictly defined static program instructions.

The term machine learning may be used interchangeably with the term machine learning.

Numerous machine learning algorithms have been developed in relation to how to classify data in machine learning. Representative examples of such machine learning algorithms include a decision tree, a Bayesian network, a support vector machine (SVM), and an artificial neural network (ANN).

The decision tree refers to an analysis method that plots decision rules on a tree-like graph to perform classification and prediction.

The Bayesian network is a model that represents the probabilistic relationship (conditional independence) between a plurality of variables in a graph structure. The Bayesian network is suitable for data mining through unsupervised learning.

The SVM is a supervised learning model for pattern recognition and data analysis, mainly used in classification and regression analysis.

The ANN is a data processing system in which a plurality of neurons, referred to as nodes or processing elements, is interconnected in layers, as a model of the interconnection relationship between the operation principle of biological neurons and neurons.

The ANN is a model used in machine learning and includes a statistical learning algorithm inspired by a biological neural network (particularly, the brain in the central nervous system of an animal) in machine learning and cognitive science.

Specifically, the ANN may mean a model having a problem-solving ability by changing the strength of connection of synapses through learning at artificial neurons (nodes) forming a network by connecting synapses.

The term ANN may be used interchangeably with the term neural network.

The ANN may include a plurality of layers, each including a plurality of neurons. In addition, the ANN may include synapses connecting neurons.

The ANN may be generally defined by the following three factors: (1) a connection pattern between neurons of different layers; (2) a learning process that updates the weight of a connection; and (3) an activation function for generating an output value from a weighted sum of inputs received from a previous layer.

The ANN includes, without being limited to, network models such as a deep neural network (DNN), a recurrent neural network (RNN), a bidirectional recurrent deep neural network (BRDNN), a multilayer perceptron (MLP), and a convolutional neural network (CNN).

The term "layer" may be used interchangeably with the term "tier" in this specification.

The ANN is classified as a single-layer neural network or a multilayer neural network according to the number of layers.

A general single-layer neural network includes an input layer and an output layer.

In addition, a general multilayer neural network includes an input layer, one or more hidden layers, and an output layer.

The input layer is a layer that accepts external data. The number of neurons of the input layer is equal to the number of input variables. The hidden layer is disposed between the input layer and the output layer. The hidden layer receives a signal from the input layer and extract characteristics. The hidden layer transfers the characteristics to the output layer. The output layer receives a signal from the hidden layer and outputs an output value based on the received signal. Input signals of neurons are multiplied by respective strengths (weights) of connection and then are summed. If the sum is larger than a threshold of the neuron, the neuron is activated to output an output value obtained through an activation function.

The DNN including a plurality of hidden layers between an input layer and an output layer may be a representative ANN for implementing deep learning which is machine learning technology.

The present disclosure may employ the term "deep learning."

The ANN may be trained using training data. Herein, training may mean a process of determining parameters of the ANN using training data for the purpose of classifying, regressing, or clustering input data. Representative examples of the parameters of the ANN may include a weight assigned to a synapse or a bias applied to a neuron.

The ANN trained by the training data may classify or cluster input data according to the pattern of the input data.

Meanwhile, the ANN trained using the training data may be referred to as a trained model in the present specification.

Next, a learning method of the ANN will be described.

The learning method of the ANN may be broadly classified into supervised learning, unsupervised learning, semi-supervised learning, and reinforcement learning.

Supervised learning is a method of the machine learning for deriving one function from the training data. Among derived functions, outputting consecutive values may be referred to as regression, and predicting and outputting a class of an input vector may be referred to as classification.

In supervised learning, the ANN is trained in a state in which a label for the training data has been given. Here, the label may refer to a correct answer (or a result value) to be inferred by the ANN when the training data is input to the ANN.

Throughout the present specification, the correct answer (or result value) to be inferred by the ANN when the training data is input is referred to as a label or labeling data.

In the present specification, labeling the training data for training the ANN is referred to as labeling the training data with labeling data. In this case, the training data and a label corresponding to the training data may configure one training set and may be input to the ANN in the form of the training set.

Meanwhile, the training data represents a plurality of features, and labeling the training data may mean labeling the feature represented by the training data. In this case, the training data may represent the feature of an input object in the form of a vector.

The ANN may derive a function of an association between the training data and the labeling data using the training data and the labeling data. Then, the ANN may determine (optimize) the parameter thereof by evaluating the derived function.

Unsupervised learning is a kind of machine learning in which the training data is not labeled.

Specifically, unsupervised learning may be a learning method that trains the ANN to discover and classify a pattern in the training data itself rather than the association between the training data and the label corresponding to the training data.

Examples of unsupervised learning may include, but are not limited to, clustering and independent component analysis.

The present disclosure may employ the term "clustering."

Examples of the ANN using unsupervised learning include, but are not limited to, a generative adversarial network (GAN) and an autoencoder (AE).

The GAN is a machine learning method of improving performance through competition between two different AI models, i.e., a generator and a discriminator.

In this case, the generator is a model for generating new data and may generate new data based on original data.

The discriminator is a model for discriminating the pattern of data and may serve to discriminate whether input data is original data or new data generated by the generator.

The generator may receive and learn data that has failed to deceive the discriminator, while the discriminator may receive deceiving data from the generator and learn the data. Accordingly, the generator may evolve to maximally deceive the discriminator, while the discriminator may evolve to well discriminate between the original data and the data generated by the generator.

The AE is a neural network which aims to reproduce input itself as output.

The AE may include an input layer, at least one hidden layer, and an output layer. Since the number of nodes of the hidden layer is smaller than the number of nodes of the input layer, the dimensionality of data is reduced and thus compression or encoding is performed.

Furthermore, data output from the hidden layer is input to the output layer. In this case, since the number of nodes of the output layer is greater than the number of nodes of the hidden layer, the dimensionality of the data increases and thus decompression or decoding is performed.

Meanwhile, the AE controls the strength of connection of neurons through learning, such that input data is represented as hidden-layer data. In the hidden layer, information is represented by fewer neurons than neurons of the input layer, and reproducing input data as output may mean that the hidden layer finds a hidden pattern from the input data and expresses the hidden pattern.

Semi-supervised learning is a kind of machine learning that makes use of both labeled training data and unlabeled training data.

One semi-supervised learning technique involves inferring the label of unlabeled training data and then performing learning using the inferred label. This technique may be useful when labeling cost is high.

Reinforcement learning is a theory that an agent is capable of finding an optimal path based on experience without reference to data when an environment in which the agent may decide what action is taken every moment is given.

Reinforcement learning may be mainly performed by a Markov decision process (MDP).

The MDP will be briefly described. First, an environment including information necessary for the agent to take a subsequent action is given. Second, what action is taken by the agent in that environment is defined. Third, a reward given to the agent when the agent successfully takes a certain action and a penalty given to the agent when the agent fails to take a certain action are defined. Fourth, experience is repeated until a future reward is maximized, thereby deriving an optimal action policy.

The ANN may specify the structure thereof by a configuration, an activation function, a loss or cost function, a learning algorithm, and an optimization algorithm, of a model. Hyperparameters may be preconfigured before learning, and model parameters may then be configured through learning to specify the contents of the ANN.

For instance, the structure of the ANN may be determined by factors, including the number of hidden layers, the number of hidden nodes included in each hidden layer, an input feature vector, and a target feature vector.

The hyperparameters include various parameters which need to be initially configured for learning, such as initial values of the model parameters. The model parameters include various parameters to be determined through learning.

For example, the hyperparameters may include an initial value of a weight between nodes, an initial value of a bias between nodes, a mini-batch size, a learning iteration number, and a learning rate. Furthermore, the model parameters may include the weight between nodes and the bias between nodes.

The loss function may be used as an index (reference) for determining an optimal model parameter during a learning process of the ANN. Learning in the ANN may mean a process of manipulating model parameters so as to reduce the loss function, and the purpose of learning may be determining the model parameters that minimize the loss function.

The loss function may typically use a means squared error (MSE) or cross-entropy error (CEE), but the present disclosure is not limited thereto.

The CEE may be used when a correct answer label is one-hot encoded. One-hot encoding is an encoding method in which only for neurons corresponding to a correct answer, a correct answer label value is set to be 1 and, for neurons that do not correspond to the correct answer, the correct answer label value is set to be 0.

Machine learning or deep learning may use a learning optimization algorithm to minimize the loss function. Examples of the learning optimization algorithm include gradient descent (GD), stochastic gradient descent (SGD), momentum, Nesterov accelerate gradient (NAG), AdaGrad, AdaDelta, RMSProp, Adam, and Nadam.

GD is a method that adjusts the model parameters in a direction that reduces a loss function value in consideration of the slope of the loss function in a current state.

The direction in which the model parameters are adjusted is referred to as a step direction, and a size by which the model parameters are adjusted is referred to as a step size.

Here, the step size may mean a learning rate.

GD may obtain a slope of the loss function through partial derivative using each of the model parameters and update the model parameters by adjusting the model parameters by the learning rate in the direction of the obtained slope.

SGD is a method that separates training data into mini batches and increases the frequency of GD by performing GD for each mini batch.

AdaGrad, AdaDelta, and RMSProp are methods that increase optimization accuracy in SGD by adjusting the step size. Momentum and NAG are methods that increase optimization accuracy in SGD by adjusting the step direction. Adam is a method that combines momentum and RMSProp and increases optimization accuracy by adjusting the step size and the step direction. Nadam is a method that combines NAG and RMSProp and increases optimization accuracy by adjusting the step size and the step direction.

The learning rate and accuracy of the ANN greatly rely not only on the structure and learning optimization algorithms of the ANN but also on the hyperparameters. Therefore, in order to obtain a good learning model, it is important to configure a proper hyperparameter as well as determining a proper structure and learning algorithm of the ANN.

In general, the ANN is trained by experimentally configuring the hyperparameters as various values, and an optimal hyperparameter that provides a stable learning rate and accuracy as a result of learning is configured.

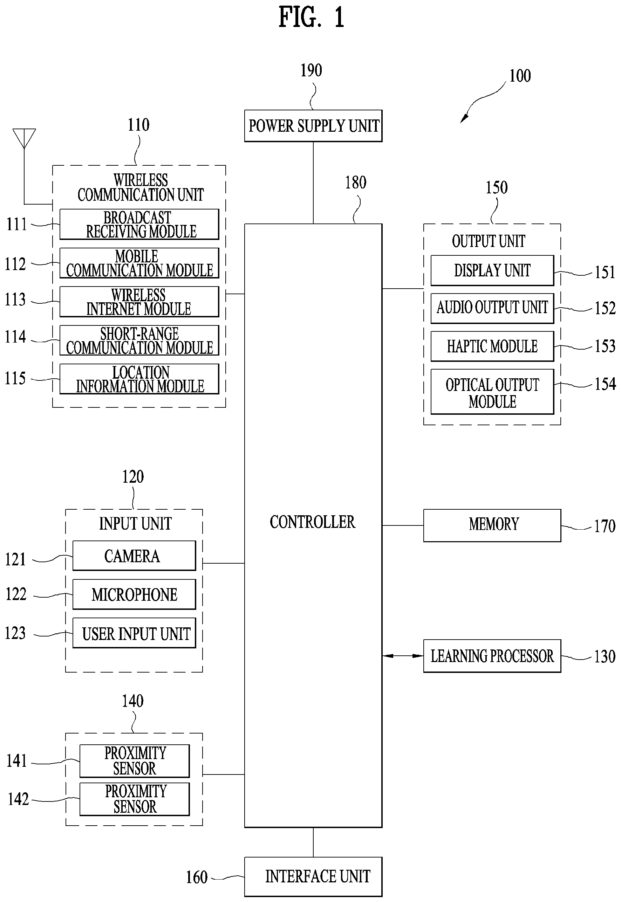

FIG. 1 is a block diagram illustrating a terminal related to the present disclosure.

A terminal 100 may be implemented as a fixed or mobile device such as a cell phone, a projector, a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (e.g., a smartwatch, smart glasses, a head mounted display (HMD)), a set-top box (STB), a DMB receiver, a radio, a washing machine, a refrigerator, a desktop computer, or a digital signage.

In other words, the terminal 100 may be implemented in various forms of household appliances, and may be applied to a fixed or mobile robot.

The terminal 100 may perform the functions of a voice agent. The voice agent may be a program that recognizes a user's speech and outputs sound corresponding to a response appropriate to the recognized user's voice.

The terminal 100 may include a wireless communication unit 110, an input unit 120, a learning processor 130, a sensing unit 140, an output unit 150, an interface unit 160, a memory 170, a controller 180, and a power supply unit 190. The components illustrated in FIG. 1 are not essential to implement the mobile terminal. The mobile terminal described herein may have more or fewer components than those listed above.

A trained model may be embedded on the terminal 100.

The trained model may be implemented in hardware, software, or a combination of hardware and software. When a part or the entirety of the trained model is implemented in software, one or more instructions constituting the trained model may be stored in the memory 170.

The wireless communication unit 110 typically includes one or more modules which permit communications such as wireless communications between the terminal 100 and a wireless communication system, communications between the terminal 100 and another mobile terminal, communications between the terminal 100 and an external server. Further, the wireless communication unit 110 typically includes one or more modules which connect the terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE) , LTE-A(Long Term Evolution-Advanced), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WibroWiBro), Worldwide Interoperability for Microwave Access (Wimax-WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the terminal 100 and a wireless communication system, communications between the terminal 100 and another terminal 100, or communications between the terminal and a network where another mobile terminal 100 (or an external server) is located, via wireless personal area networks. One example of the wireless area networks is a wireless personal area networks.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The input unit 120 may be configured to permit various types of input to the mobile terminal 120. Examples of such input include audio, image, video, data, and user input. Image and video input is often obtained using one or more cameras 121. The cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the terminal 100. As another example, the cameras 121 may be located in a stereoscopic arrangement to acquire left and right images for implementing a stereoscopic image.

The microphone 122 is generally implemented to permit audio input to the terminal 100. The audio input can be processed in various manners according to a function being executed in the terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the terminal 100. The user input unit 123 may include one or more of a mechanical input element (for example, a key, a button located on a front and/or rear surface or a side surface of the terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The learning processor 130 learns a model configured as an artificial neural network based on training data.

Specifically, the learning processor 130 may determine optimized model parameters of the artificial neural network by iteratively training the artificial neural network using various learning techniques described above.

In the present disclosure, an artificial neural network whose parameters are determined by training based on the training data may be referred to as a trained model.

The trained model may be used to infer an output value for new input data other than the training data.

The learning processor 130 may be configured to receive, classify, store, and output information to be utilized for data mining, data analysis, intelligent decision making, and machine learning algorithms and techniques.

The learning processor 130 may include one or more memory units configured to store data that is received, detected, sensed, generated, predefined, or output by another component, device, terminal, or device in communication with the terminal.

The learning processor 130 may include a memory integrated or implemented in the terminal. In some embodiments, the learning processor 130 may be implemented using the memory 170.

Optionally or additionally, the learning processor 130 may be implemented using a memory related to the terminal, such as an external memory directly coupled to the terminal or a memory maintained on a server communicating with the terminal.

In other embodiments, the learning processor 130 may be implemented using a memory maintained in a cloud computing environment, or another remote memory location accessible by the terminal using a communication method such as a network.

The learning processor 130 may be generally configured to store data in one or more databases to identify, index, categorize, manipulate, store, retrieve, and output data for use in supervised or unsupervised learning, data mining, predictive analytics, or other machines. Here, the databases may be implemented using the memory 170, the memory 230 of the learning device 200, a memory maintained in a cloud computing environment, or another remote memory location accessible by the terminal through a communication method such as a network.

The information stored in the learning processor 130 may be utilized by the controller 180 or one or more other controllers of the terminal using any of a variety of different types of data analysis algorithms and machine learning algorithms.

Examples of such algorithms include, but are not limited to, a k-nearest neighbors system, fuzzy logic (e.g., possibility theory), a neural network, a Boltzmann machine, vector quantization, a pulse neural network, a support vector machine, a maximum margin classifier, hill climbing, a inductive logic system, a Bayesian network, Petri net (e.g., a finite state machine, the Mealy machine, Moore finite state machine), a classifier tree (e.g., a perceptron tree, a support vector tree, a Markov tree, a decision tree forest, a random forest), a reading model and system, artificial fusion, sensor fusion, image fusion, reinforcement learning, augmented reality, pattern recognition, and automated planning.

The controller 180 may determine or predict at least one executable operation of the terminal based on information determined or generated using data analysis and machine learning algorithms. To this end, the controller 180 may request, retrieve, receive, or utilize data from the learning processor 130, and may control the terminal to execute a predicted operation or an operation determined to be desirable among the at least one executable operation.

The controller 180 may perform various functions that implement intelligent emulation (i.e., a knowledge-based system, a reasoning system, and a knowledge acquisition system). This may be applied to various types of systems (e.g., fuzzy logic systems), including adaptive systems, machine learning systems, and artificial neural networks.

The controller 180 may also include sub-modules that enable operations involving speech and natural language speech processing, such as an I/O processing module, an environmental conditions module, a speech to text (STT) processing module, a natural language processing module, a task flow processing module, and a service processing module.

Each of these sub-modules may have access to one or more systems or data and models, or a subset or superset thereof in the terminal. Further, each of the sub-modules may provide various functions, including vocabulary indexes, user data, task flow models, service models, and automatic speech recognition (ASR) systems.

In other embodiments, other aspects of the controller 180 or the terminal may be implemented with the sub-modules, systems, or data and models.

In some examples, based on data from the learning processor 130, the controller 180 may be configured to detect and recognize requirements based on contextual conditions or user intent expressed as user input or natural language input.

The controller 180 may actively derive and acquire information necessary to completely determine the requirements based on the contextual conditions or user intent. For example, controller 180 may actively derive the information necessary to determine the requirements by analyzing past data including historical input and output, pattern matching, unambiguous words, and input intent.

The controller 180 may determine a task flow for executing a function that responds to the requirements based on the contextual conditions or user intent.

The controller 180 may be configured to collect, sense, extract, detect, and/or receive signals or data used for data analysis and machine learning tasks via one or more sensing components on the terminal to gather information for processing and storage by the learning processor 130.

Collecting information may include sensing information by sensors, extracting information stored in the memory 170, or receiving information from another terminal, entity, or external storage device via communication means.

The controller 180 may collect usage history information from the terminal and store the same in the memory 170.

The controller 180 may use the stored usage history information and predictive modeling to determine the best match for execution of a particular function.

The controller 180 may receive or sense ambient environmental information or other information using the sensing unit 140.

The controller 180 may receive broadcast signals and/or broadcast-related information, wireless signals, and wireless data through the wireless communication unit 110.

The controller 180 may receive image information (or a corresponding signals), audio information (or a corresponding signal), data, or user input information from the input unit 120.

The controller 180 may collect the information in real time, process or classify the information (e.g., knowledge graph, command policy, personalized database, dialog engine, etc.), and store the processed information in the memory 170 or the learning processor 130.

When the operation of the terminal is determined based on the data analysis and machine learning algorithms and techniques, the controller 180 may control components of the terminal to execute the determined operation. Then, the controller 180 may control the terminal according to a control instruction to perform the determined operation.

When a particular operation is performed, the controller 180 may analyze historical information indicating the execution of the particular operation using the data analysis and machine learning algorithm and technique, and may update the previously learned information based on the analyzed information.

Thus, the controller 180, together with the learning processor 130, may improve the accuracy of the future performance of the data analysis and machine learning algorithm and technique based on the updated information.

The sensing unit 140 is typically implemented using one or more sensors configured to sense internal information of the mobile terminal, the surrounding environment of the mobile terminal, user information, and the like. For example, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the terminal 100 and a user, as well as function as the user input unit 123 which provides an input interface between the terminal 100 and the user.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

An optical output module 154 can output a signal for indicating an event generation using light of a light source. Examples of events generated in the terminal 100 may include message reception, call signal reception, a missed call, an alarm, a schedule notice, an email reception, information reception through an application, and the like.

The interface unit 160 serves as an interface for external devices to be connected with the terminal 100. For example, the interface unit 160 can receive data transmitted from an external device, receive power to transfer to elements and components within the terminal 100, or transmit internal data of the terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The memory 170 is typically implemented to store data to support various functions or features of the terminal 100. For instance, the memory 170 may be configured to store application programs executed in the terminal 100, data or instructions for operations of the terminal 100, and the like. Some of these application programs may be downloaded from an external server via wireless communication. Other application programs may be installed within the terminal 100 at time of manufacturing or shipping, which is typically the case for basic functions of the terminal 100 (for example, receiving a call, placing a call, receiving a message, sending a message, and the like). It is common for application programs to be stored in the memory 170, installed in the terminal 100, and executed by the controller 180 to perform an operation (or function) for the terminal 100.

The controller 180 typically functions to control overall operation of the terminal 100, in addition to the operations associated with the application programs.

The controller 180 may provide or process information or functions appropriate for a user by processing signals, data, information and the like, which are input or output by the various components depicted in FIG. 1, or activating application programs stored in the memory 170. As one example, the controller 180 controls some or all of the components according to the execution of an application program that have been stored in the memory 170.

The power supply unit 190 can be configured to receive external power or provide internal power in order to supply appropriate power required for operating elements and components included in the terminal 100. The power supply unit 190 may include a battery, and the battery may be configured to be embedded in the terminal body, or configured to be detachable from the terminal body.

At least some of the above-described components may operate in cooperation with each other to implement the operation, control, or control method of the mobile terminal according to various embodiments described below. Furthermore, the operation, control, or control method of the mobile terminal may be implemented on the mobile device by driving at least one application stored in the memory 170.

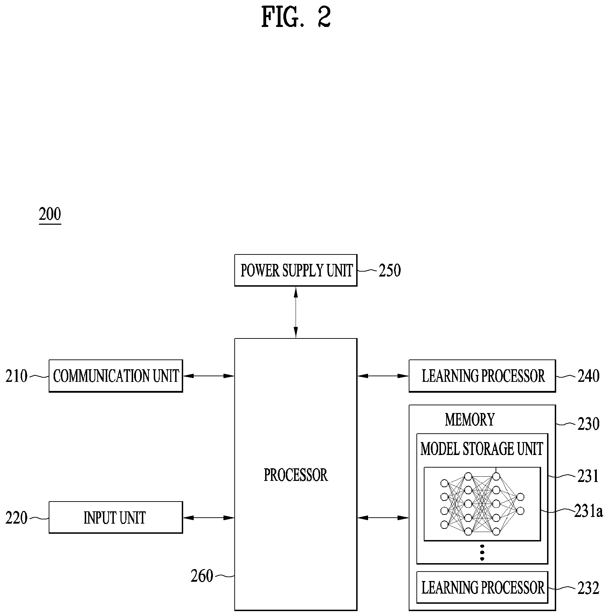

FIG. 2 is a block diagram illustrating a configuration of the learning device 200 for an artificial neural network according to one embodiment of the present disclosure.

The learning device 200 is a device or server configured separately outside of the terminal 100 and may perform the same function as the learning processor 130 of the terminal 100.

That is, the learning device 200 may be configured to receive, classify, store, and output information to be utilized for data mining, data analysis, intelligent decision making, and machine learning algorithms. Here, the machine learning algorithms may include a deep learning algorithm.

The learning device 200 may communicate with the at least one terminal 100, and may analyze or learn data on behalf of or by assisting the terminal 100 to derive results. In this context, assisting another device may mean distributing computational power through distributed processing.

The learning device 200 of the artificial neural network represents various devices for learning the artificial neural network, and may generally refer to a server. It may be referred to as a learning device, a learning server, or the like.

In particular, the learning device 200 may be implemented not only as a single server, but also as a set of multiple server, a cloud server, or combinations thereof.

That is, multiple learning devices 200 may be configured to form a learning device set (or cloud server), and at least one learning device 200 in the learning device set may analyze or learn data through distributed processing to derive results.

The learning device 200 may transmit a model trained by machine learning or deep learning to the terminal 100 periodically or on a request.

Referring to FIG. 2, the learning device 200 may include a communication unit 210, an input unit 220, a memory 230, a learning processor 240, a power supply unit 250, and a processor 260.

The communication unit 210 may correspond to an element including the wireless communication unit 110 and the interface unit 160 of FIG. 1. That is, it may transmit and receive data to and from other devices via wired and wireless communications or interfaces.

The input unit 220 is an element corresponding to the input unit 120 of FIG. 1, and may acquire data by receiving data through the communication unit 210.

The input unit 220 may acquire training data for model training and input data for acquiring an output using a trained model.

The input unit 220 may acquire unprocessed input data. In this case, the processor 260 may preprocess the acquired data to generate training data or preprocessed input data that can be input to the model training.

In this case, the preprocessing of the input data performed by the input unit 220 may mean extracting input features from the input data.

The memory 230 is an element corresponding to the memory 170 of FIG. 1.

The memory 230 may include a model storage unit 231 and a database 232.

The model storage unit 231 stores a model (or artificial neural network) 231a that is being trained or has been trained by the learning processor 240, and stores the updated model when the model is updated through training.

In this regard, the model storage unit 231 may store the trained model in a plurality of versions depending on the time of training or the training progress as needed.

The artificial neural network 231a shown in FIG. 2 is merely an example of an artificial neural network including multiple hidden layers, and the artificial neural network of the present disclosure is not limited thereto.

The artificial neural network 231a may be implemented in hardware, software, or a combination of hardware and software. When a part or the entirety of the artificial neural network 231a is implemented in software, one or more instructions constituting the artificial neural network 231a may be stored in the memory 230.

The database 232 stores input data acquired through the input unit 220, training data used to train the model, the training history of the model, and the like.

The input data stored in the database 232 may be raw input data or data that has been processed to be suitable for model training.

The training processor 240 is an element corresponding to the training processor 130 of FIG. 1.

The training processor 240 may train the artificial neural network 231a using training data or a training set.

The learning processor 240 may train the artificial neural network 231a by directly acquiring data obtained by preprocessing the input data acquired by the processor 260 through the input unit 220, or by acquiring preprocessed input data stored in the database 232.

Specifically, the learning processor 240 may iteratively train the artificial neural network 231a using various training techniques described above to determine optimized model parameters for the artificial neural network 231a.

In the present disclosure, an artificial neural network whose parameters are determined by training using training data may be referred to as a trained model.

In this case, the trained model may be embedded on the training device 200 of the artificial neural network to infer a result value, or may be transmitted to another device such as the terminal 100 through the communication unit 210 so as to be embedded on the other device.

Furthermore, when the learning model is updated, the updated learning model may be transmitted to another device such as the terminal 100 through the communication unit 210 and embedded on the other device.

The power supply unit 250 is an element corresponding to the power supply unit 190 of FIG. 1.

Hereinafter, a redundant description of the corresponding configurations will be omitted. Furthermore, FIGS. 1 and 2 may be used to understand the functions performed by the terminal described below.

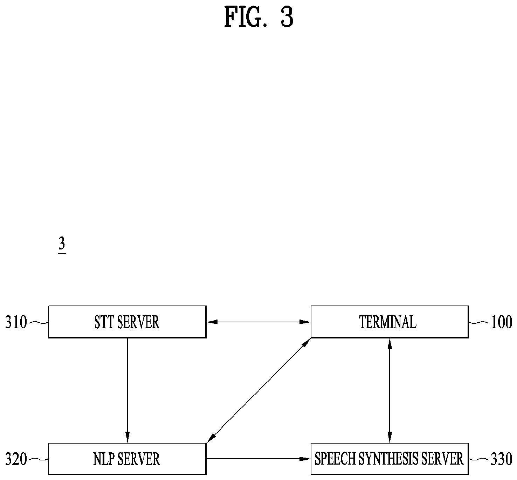

FIG. 3 is a diagram illustrating a speech system according to one embodiment of the present disclosure.

Referring to FIG. 3, the speech system 3 may include a terminal 100, a Speech To Text (STT) server 310, a Natural Language Processing (NLP) server 320, and a speech synthesis server 330. Here, the terminal 100 may refer to an AI device 100. In the following description, the terminal 100 is assumed to be the AI device 100.

The AI device 100 may transmit speech data to the STT server 310.

The STT server 310 may convert the speech data received from the AI device 100 into text data.

The STT server 310 may use a language model to increase the accuracy of the speech-to-text conversion.

A language model may mean a model that can calculate the probability of a sentence, or a model that can calculate the probability of the next word given preceding words. For example, language models may include probabilistic language models such as a unigram model, a bigram model, and an N-gram model. The unigram model assumes that all word conjugations are completely independent of each other. In this model, the probability of a word sequence is calculated as the product of the probabilities of each word. The bigram model assumes that a word conjugation depends only on one preceding word. The N-gram model assumes that a word conjugation depends on the (n-1) preceding words.

That is, the STT server 310 may use a language model to determine whether the text data into which the speech data is converted has been obtained through proper conversion. Thereby, the accuracy of the conversion into text data may be increased.

The NLP server 320 may receive text data from STT server 310. Based on the received text data, the NLP server 320 may perform an intent analysis on the text data.

The NLP server 320 may transmit intent analysis information indicating a result of the intent analysis to the AI device 100.

The NLP server 320 may generate the intent analysis information by sequentially performing morphological analysis, syntactic analysis, dialogue analysis, and dialog processing on the text data.

In the morphological analysis, text data corresponding to the speech uttered by the user is classified into morphemes, the smallest units of meaning, and the part of speech for each classified morpheme is determined.

In the syntactic analysis, the results of the morphological analysis phase are used to classify the text data into noun phrases, verb phrases, adjective phrases, and so on, and to determine any relationships between the classified phrases.

By performing the syntactic analysis, the subject, object, and modifiers of the user's speech may be determined.

In the dialog analysis, the intent of the user's speech is analyzed based on the results of the syntactic analysis. Specifically, in the dialog analysis, the intent of a sentence, such as whether the user is asking a question, making a request, or simply expressing an emotion is determined.

In the dialog processing, it is determined whether to answer the user's utterance, respond to the utterance, or ask questions for more information, based on the results of the dialog analysis.

After the dialog processing, the NLP server 320 may generate intent analysis information that includes one or more of answering, responding, or asking for more information about the intent of the user's utterance.

The NLP server 320 may also receive text data from the AI device 100. For example, in the case where the AI device 100 supports the function of speech-to-text conversion, the AI device 100 may convert the speech data to text data and transmit the text data to the NLP server 320.

The speech synthesis server 330 may combine the stored speech data to generate synthesized speech.

The speech synthesis server 330 may record the speech of a person selected as a model, and may segment the recorded speech into syllables or words. The speech synthesis server 330 may store the segmented speech in an internal or external database on a syllable-by-syllable or word-by-word basis.

The speech synthesis server 330 may retrieve syllables or words corresponding to the given text data from the database and synthesize a combination of the retrieved syllables or words to generate a synthesized speech.

The speech synthesis server 330 may have multiple spoken language groups corresponding to multiple languages stored therein. For example, the speech synthesis server 330 may include a first spoken language group recorded in Korean and a second spoken language group recorded in English.

The speech synthesis server 330 may translate the text data in the first language into text in the second language, and generate synthesized speech corresponding to the translated text in the second language using the second spoken language group.

The speech synthesis server 330 may transmit the generated synthesized speech to the AI device 100.

The speech synthesis server 330 may receive intent analysis information from the NLP server 320.

Based on the intent analysis information, the speech synthesis server 330 may generate a synthesized speech that reflects the user's intent. In one embodiment, the STT server 310, NLP server 320, and speech synthesis server 330 may be implemented with a single server.

Each of the functions of the STT server 310, NLP server 320, and speech synthesis server 330 described above may also be performed by the AI device 100. To this end, the AI device 100 may include multiple processors.

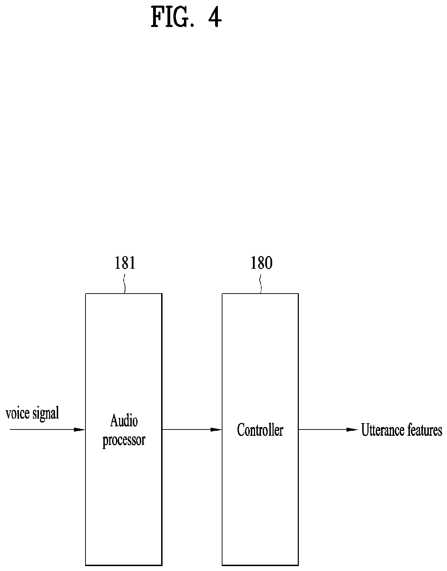

FIG. 4 is a diagram illustrating a procedure of extracting features of a user's utterance from a speech signal according to one embodiment of the present disclosure.

For the procedure illustrated in FIG. 4, the terminal 100 shown in FIG. 1 may further include an audio processor 181.

The audio processor 181 may be implemented as a chip separate from the controller 180, or may be implemented as a chip included in the controller 180.

The audio processor 181 may remove noise from the speech signal.

The audio processor 181 may convert the speech signal into text data. To this end, the audio processor 181 may include an STT engine.

The audio processor 181 may recognize a wake-up word for activating speech recognition of the AI device 100. The audio processor 181 may convert the wake-up word received via the microphone 121 into text data, and determine that the wake-up word is recognized if the converted text data is text data corresponding to a pre-stored wake-up word.

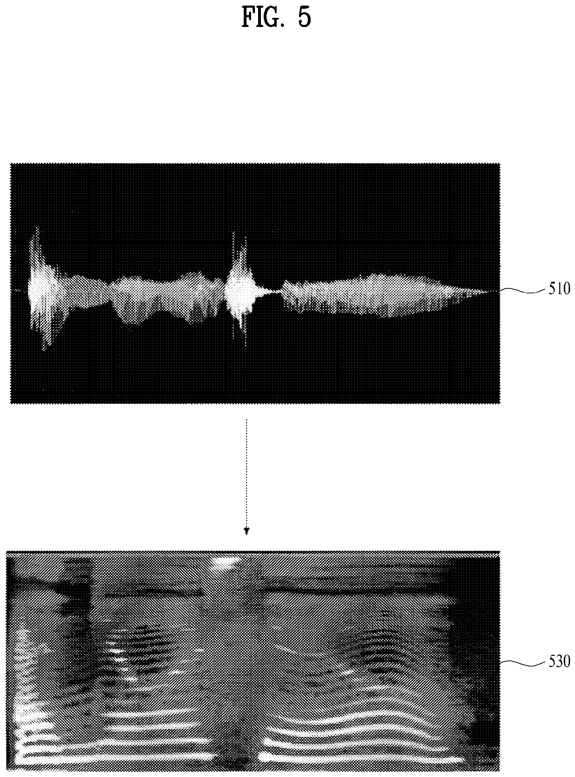

The audio processor 181 may convert the noise-removed speech signal into a power spectrum. The power spectrum may be a parameter that indicates frequency components contained in the temporally varying waveform of the speech signal and the magnitude thereof. The power spectrum shows the distribution of the values of the square of the amplitude over the frequency of the waveform of the speech signal. Details will be described with reference to FIG. 5.

FIG. 5 is a diagram illustrating an example of converting a speech signal into a power spectrum according to one embodiment of the present disclosure.

Referring to FIG. 5, a speech signal 510 is illustrated. The speech signal 510 may be received via the microphone 121, or may be a signal pre-stored in the memory 170.

The x-axis of the speech signal 510 may represent time, and the y-axis may represent a magnitude of the amplitude.

The audio processor 181 may convert the speech signal 510 with the x-axis being the time axis into a power spectrum 530 with the x-axis being the frequency axis.

The audio processor 181 may convert the speech signal 510 into a power spectrum 530 using the Fast Fourier Transform (FFT).

In the power spectrum 530, the x-axis represents the frequency and the y-axis represents the square of the amplitude.

Referring again to FIG. 4, the controller 180 may determine the utterance features of a user based on one or more of the text data or power spectrum 530 delivered from the audio processor 181. The features of the user's utterance may include the user's gender, the pitch of the user's voice, the user's tone, the topic of the user's speech, the user's speech speed, and the volume of the user's voice.

The controller 180 may acquire a frequency of the speech signal 510 and an amplitude corresponding to the frequency based on the power spectrum 530.

Based on the frequency band of the power spectrum 530, the controller 180 may determine the gender of the user who uttered the speech. For example, the controller 180 may determine that the gender of the user is male if the frequency band of the power spectrum 530 is within a preset first frequency band range.

The controller 180 may determine that the gender of the user is female if the frequency band of the power spectrum 530 is within a preset second frequency band range. Here, the second frequency band range may be wider than the first frequency band range.

The controller 180 may determine the pitch of the voice based on the frequency band of the power spectrum 530. For example, the controller 180 may determine the pitch of the voice based on the magnitude of the amplitude within a specific frequency band range.

The controller 180 may determine a user's tone based on the frequency bands of the power spectrum 530. For example, the controller 180 may determine a frequency band of the power spectrum 530 whose amplitude is greater than a certain level among the frequency bands of the power spectrum 530 as the user's main sound range, and determine the determined main sound range as the user's tone.

The controller 180 may determine, from the converted text data, the user's speech speed based on the number of syllables spoken per unit time.

The controller 180 may determine a topic of the user's speech, using a bag-of-words model for the converted text data. The bag-of-words model is a technique for extracting commonly used words based on the frequency of words in a sentence. Specifically, the bag-of-words model is a technique for extracting unique words from within a sentence and representing the frequency of each extracted word as a vector to determine the feature of the topic of the speech. For example, the controller 180 may classify the topic of the user's speech as exercise if words such as "running," 'fitness," and the like are frequently used in the text data.

The controller 180 may determine the topic of the user's speech from the text data, using a known text categorization technique. The controller 180 may extract keywords from the text data to determine the topic of the user's speech.

The controller 180 may determine the volume of the user's voice, considering the amplitude information across all frequency bands. For example, the controller 180 may determine the volume of the user's voice based on an average or weighted average of the amplitudes in each frequency band of the power spectrum.

The functions of the audio processor 181 and the controller 180 described with reference to FIGS. 4 and 5 may be performed by either the NLP server 320 or the speech synthesis server 330. For example, the NLP server 320 may extract a power spectrum from the speech signal, and determine features of the user's utterance based on the extracted power spectrum.

It should be appreciated that the speech recognition system described with reference to FIGS. 3 to 5 may be applied in understanding the disclosure below. Specifically, in the subsequent drawings, a dialog input or output as text may be input or output as speech based on the speech recognition system described with reference to FIGS. 3 to 5. Furthermore, in the subsequent drawings, the speech recognition technology used to edit video may employ the speech recognition system described with reference to FIGS. 3 to 5.

In one embodiment of the present disclosure, feedback from a user may be received based on an interactive interface through a message and a video service reflecting the user's intent may be provided using AI technology.

For example, in the present disclosure, images (photos or video) captured by a user with a terminal may be automatically analyzed to generate videos applicable to various SNS. In editing the images, the user's preferences, background music, image style, target SNS, etc. may be displayed through an interactive UX in the form of a chatbot for optimal image editing.

Based on user feedback, preferences for a target object may be specified and AI retraining in relation to image quality or the like may be performed.

In other words, in one embodiment of the present disclosure, keywords may be extracted through a dialog, and a recorded video may be edited based on the extracted keywords and outputs to the user.

For example, the keywords extracted through the dialog may be used to analyze and edit important scenes in the video. Also, functions such as automatic mosaic processing to protect portrait rights, inserting music selected by the user or analyzing the video and inserting matching music, and providing filters preferred by the user may be provided.

To this end, in one embodiment of the present disclosure, dialogs necessary for video editing may be conducted and important keywords may be extracted. In addition, in the operation of keyword extraction, dialogs based on video editing priorities may be guided. For example, the image editing system of the present disclosure may ask the user through an interactive interface whether to insert background music (BGM), whether to edit cuts, whether to insert subtitles, whether to insert effects, whether to adjust audio, and whether to adjust colors or filters. Then, keywords may be extracted based on the dialog received from the user, and the video may be edited based on the extracted keywords. In addition, the images may be re-edited to reflect user feedback after waiting for and completing the image editing.

As a result, the AI video mixer may automatically generate uploadable images. In addition, messages may be collected interactively to reflect the intentions and preferences of the user, even if the user does not have specialized knowledge in image editing.

Hereinafter, the present disclosure will be described in detail.

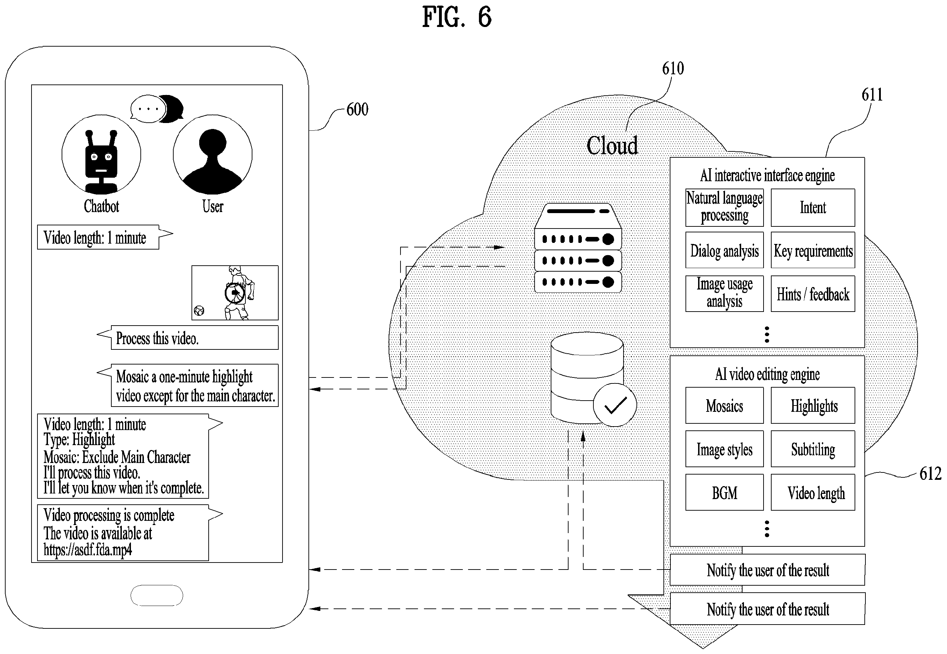

FIG. 6 is a diagram illustrating an AI device according to one embodiment of the present disclosure.

To illustrate the present disclosure, FIG. 6 presents the basic concepts by which a terminal 600 and a cloud server 610 operate. In particular, although FIG. 6 illustrates the terminal 600 and the cloud server 610 as separated elements, an AI device may include the terminal 600, and an AI interactive interface engine 611 and an AI video editing engine 612 in the cloud server 610.

That is, since the image editing system can be operated within the terminal 600, the terminal 600 may include the AI interactive interface engine 611 and the AI video editing engine 612. However, for simplicity, the terminal 600 and the cloud server 610 will be described as separated embodiments. For the AI interactive interface engine 611 and the AI video editing engine 612 described herein, the AI technology described with reference to FIGS. 1 and 2 may be applied.

Referring to FIG. 6, the AI device of FIG. 6 may include the terminal 600 and the cloud server 610.

In this regard, the terminal 100 described above with reference to FIGS. 1 to 3 may be employed as the terminal 600. That is, in one embodiment of the present disclosure, the terminal 600 may provide a user with an interactive interface provided by the image editing system. That is, the terminal 600 may provide the image editing function through a user-friendly interactive interface.

More specifically, when a user accesses the video editing system, the terminal 600 may output an interactive interface to an input/output (I/O) unit (e.g., a display or touchscreen) for interacting with the user. An embodiment of accessing the image editing system may include a general operation performed to execute an application or program called an image editing system by executing a chat bot or accessing a preset URL.

The terminal 600 may receive a video from the user. More specifically, the terminal 600 may receive images uploaded by the user using an interactive interface. Thereafter, the terminal 600 may interact with the user to extract keywords for editing images.

In this regard, the terminal 600 may transmit the content of the dialog with the user through the interactive interface to the cloud server 610 to extract the keywords. More specifically, the cloud server 610 may analyze the content of the dialog with the user based on the received content of the dialog with the user and extract the keywords, using the AI interactive interface engine 611. For example, the AI interactive interface engine 611 may perform natural language processing, identify the user's intent, analyze the dialog, determine the user's key requirements, analyze the image usage, and acquire hints or feedback, based on the content of the dialog with the user.

The cloud server 610 may transmit the extracted keywords to the terminal 600, and the terminal 600 may output a dialog through an interactive interface to identify keywords for image editing based on the extracted keywords. Then, if the terminal 600 receives a confirmation of the keywords from the user, the terminal 600 may edit the images uploaded by the user based on the keywords.

In this case, the terminal 600 may edit the user-uploaded images through the AI video engine 612. More specifically, the terminal 600 may transmit the extracted keywords and the received images to the AI video engine 612. The AI video editing engine 612 may perform image editing based on the received images and keywords. At this time, the AI video engine 612 may perform a mosaic processing function, a highlight extraction function, an image style editing function, a subtitle insertion function, a BGM insertion function, a video length editing function, and the like on the received images. Each of the editing functions will be described in detail below.

The AI video editing engine 612 may transmit the edited images to the terminal 600, and the terminal 600 may share the edited images with the user through an interactive interface. In this regard, the AI video editing engine 612 may upload the edited images to the memory within the cloud server 610 while transmitting the edited images to the terminal 600.

In one embodiment of the present disclosure, the terminal 600 may receive feedback from the user after sharing the edited images with the user through the interactive interface, and may transmit the received feedback to the cloud server 600. Further, although not shown in the figures, the cloud server 600 may analyze the transmitted feedback, and may update the AI interactive interface engine 611 and the AI video editing engine 612 based on the analyzed feedback.

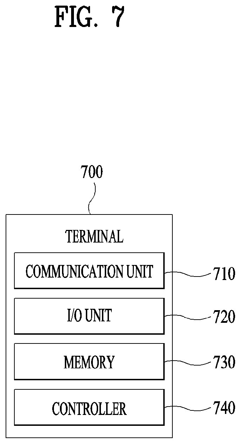

FIG. 7 is a diagram illustrating an AI device according to one embodiment of the present disclosure. In the following description, the AI device will be referred to as a terminal 700 for simplicity.

Referring to FIG. 7, the terminal 700 configured to operate an image editing system may include a communication unit 710, an I/O unit 720, a memory 730, and a controller 740. Here, the communication unit 710, the I/O unit 720, the memory 730, and the controller 740 may include the elements described above with reference to FIGS. 1 and 2. For example, the I/O unit 720 may include the input unit 120 and output unit 150 of FIG. 1.

As described above, the image editing system may be implemented within the terminal 700. Accordingly, an embodiment of performing the image editing system within the terminal 700 will describe in detail with reference to FIG. 7.

The communication unit 710 may communicate with external devices. In one embodiment of the present disclosure, the terminal 700 may receive a dialog, images, or the like from a user through the communication unit 710. Also, in one embodiment of the present disclosure, the terminal 700 may extract keywords or edit images using an external server through the communication unit 710. Hereinafter, FIG. 7 will be described assuming an embodiment in which the terminal 700 directly extracts keywords and edits images.

The I/O unit 720 may output an interactive interface for interacting with the user when the user accesses the image editing system. In one embodiment of the present disclosure, the I/O unit 720 may output, on a display unit, such as a touch screen, an interactive interface for conversing with the user.

The memory 730 may store dialogs input by the user or keywords extracted therefrom. Additionally, the memory 730 may store images uploaded by the user or store edited images. Further, the memory 730 may store user feedback on the edited images. While the memory 730 is shown as being included in the terminal 700, it may be located outside the terminal and may transmit and receive data through the communication unit 710.

The controller 740 may control the communication unit 710, the I/O unit 720, and the memory 730 described above. In one embodiment of the present disclosure, the controller 740 may extract keywords for image editing from a dialog received through an interactive interface. Further, the controller 740 may edit the received images based on the extracted keywords.

Further, when the user accesses the image editing system, the controller 740 may receive information about the user and output, through the interactive interface, a dialog for editing the images based on the information about the user. That is, the controller 740 may output a specified dialog based on the received information about the user.

In addition, the controller 740 may output a dialog about at least one editing function for editing the images through the interactive interface. The editing function may include a cut editing function, a mosaic processing function, a BGM input function, and a filter change function.

Further, when the controller 740 receives a dialog about a first editing function from the user, the controller 740 may extract keywords from the dialog about the first editing function. For example, when the controller 740 receives a dialog about the cut editing function, the controller 740 may extract relevant keywords from the dialog about the cut editing function.

The controller 740 may output a dialog for confirming keywords for the first editing function. For example, the controller 740 may output, through an interactive interface, a dialog for confirming the keywords for the cut editing function by the user.

Further, when the controller 740 receives a dialog about a second editing function from the user after extracting keywords from the dialog about the first editing function, the controller 740 may extract keywords from the dialog about the second editing function. For example, when the controller 740 receives a dialog about the mosaic processing function from the user after extracting keywords for the cut editing function through the interactive interface, the controller 740 may extract keywords from the dialog about the mosaic processing function.

Similarly, the controller 740 may output, through the interactive interface, the dialog for confirming the keywords for the first editing function and the keywords for the second editing function.

Further, the controller 740 may share preview images or an edited images for the images to be edited based on the keywords with the user through the interactive interface.

Further, the controller 740 may output at least one of an advertisement or preconfigured information through the interactive interface while editing the images. Here, the preconfigured information may include, for example, today's weather.

Further, the controller 740 may receive feedback from the user after sharing the edited images with the user. Then, the controller 740 may re-edit the edited images based on the received feedback.

Each of the embodiments will be described in more detail with reference to figures.

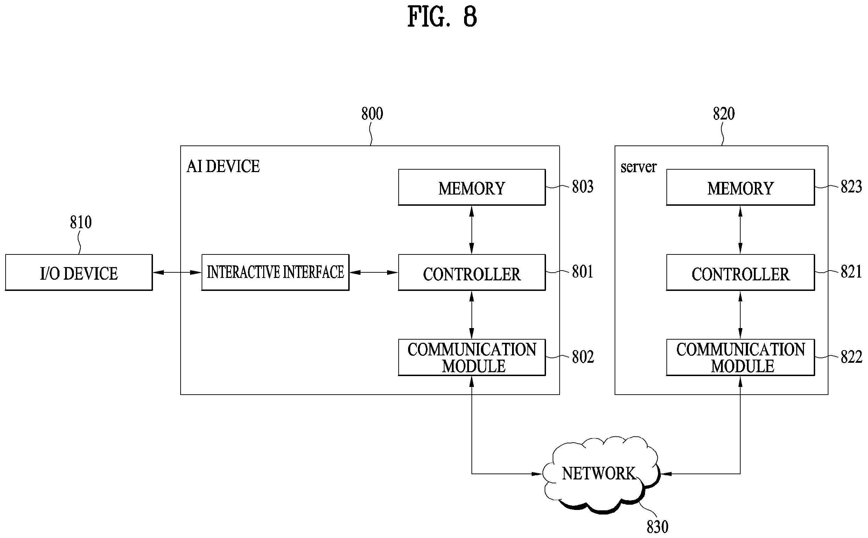

FIG. 8 is a diagram illustrating an AI device, an input/output device, and a server according to one embodiment of the present disclosure.

In contrast with FIG. 7, FIG. 8 illustrates an embodiment in which an AI device 800 is separated from an I/O device 810 and a server 820. The AI device 800 may correspond to the terminals 100, 600, and 700 described above. The AI device 800, the I/O device 810, and the server 820 are separated from each other, but may equally perform the embodiment illustrated in FIG. 7.

Referring to FIG. 8, the AI device 800 may output an interactive interface through the separate I/O device 810. Further, the AI device 800 may edit images through the separate server 820. In this regard, the AI device 800 may transmit and receive data to and from the server 820 over a network 830.

More specifically, the AI device 800 may output the interactive interface through the I/O device 810 when a user accesses the AI device 800. Unlike the case of FIG. 7, the I/O device 810 may be implemented as a device separated from the AI device 800. For example, the AI device 800 may be configured as a server, and the I/O device 810 may correspond to a simple display device. Of course, the AI device 800 and the I/O device 810 may communicate with each other in a wired or wireless manner.

In one embodiment of the present disclosure, the AI device 800 may receive, through the I/O device 810, images to be edited and a dialog about image editing the user. Then, as in the case of FIG. 7, a controller 801 of the AI device 800 may extract keywords directly based on the received dialog and may directly edit the images based on the extracted keywords.

Further, the AI device 800 may transmit the received dialog and the images to be edited to the server 820 via a first communication module 802.

The server 820 may receive the dialog and the images via a second communication module 822, and may extract keywords for image editing from the dialog through a controller 821, and may edit the images based on the extracted keywords. At this time, the first communication module 802 and the second communication module 822 may transmit and receive data over the network 830.

In addition, a first memory 803 of the AI device 800 and a second memory 823 of the server 820 may store at least one of information about the user, a dialog with the user, an image uploaded by the user, or an edited image through the interactive interface. In this case, the information about the user, the dialog with the user, the image uploaded by the user, or the edited image may be stored in both the first memory 803 of the AI device 800 and the second memory 823 of the server 820 or in only one of the memories.

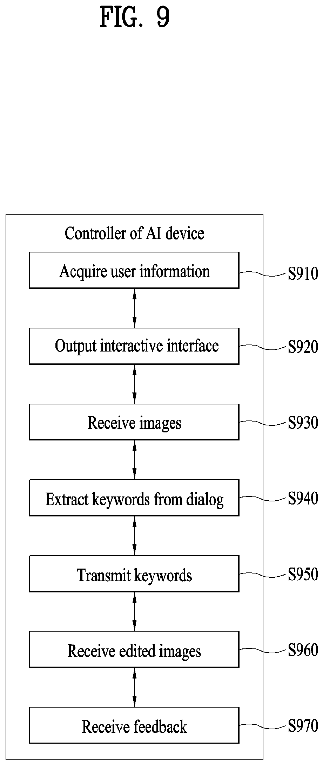

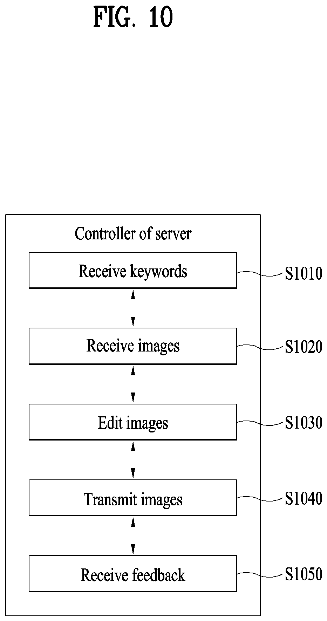

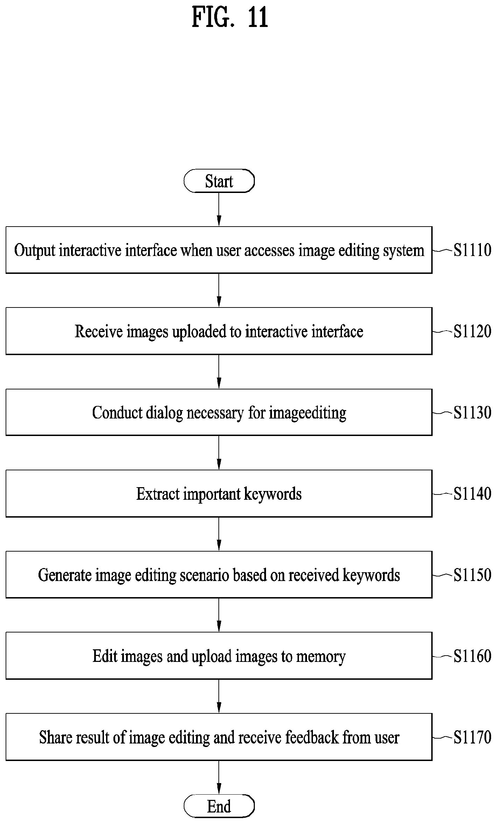

Hereinafter, operations performed by the controller 801 of the AI device 800 and the controller 821 of the server 820 separated as shown in FIG. 8 will be described with reference to FIGS. 9 and 10. Also, operations performed by the controller of an integrated image editing system such as the terminal 700 of FIG. 7 will be described with reference to FIG. 11.

FIG. 9 is a flowchart illustrating operations performed by a controller of an AI device according to one embodiment of the present disclosure. Hereinafter, for simplicity, the operations performed by the controller of the AI device will be described as being performed by the AI device.

In operation S910, when a user accesses the image editing system, the AI device may acquire user information. At this time, the AI device may acquire basic information about the user. For example, it may acquire the user's age, gender, and the like released by the user.

In operation S920, the AI device may output an interactive interface for conversing with the user based on the acquired user information. That is, the AI device may output an interactive interface suitable for the acquired user information. For example, the AI device may output a different interactive interface based on the age of the user.

In operation S930, the AI device may receive images uploaded by the user via the interactive interface. In this regard, the AI device may output a dialog to prompt the user to upload the images through the interactive interface. For example, the AI device may output a dialog, such as "Please upload the images," through the interactive interface.

In operation S940, the AI device may extract keywords for editing the images from the dialog with the user that has been transmitted and received through the interactive interface. Then, the AI device may organize a dialog for editing the images based on the received user information. For example, the AI device may output a dialog about at least one editing function for editing the images. Here, the editing function may include a cut editing function, a mosaic processing function, a BGM input function, and a filter change function. Further, in one embodiment of the present disclosure, when the AI device receives a dialog about an editing function from the user, the AI device may extract keywords from the dialog about the editing function. In this regard, the AI device may use the AI techniques described above to receive the dialog about the editing function and extract the keywords. Further, in one embodiment of the present disclosure, the AI device may output a dialog for confirming the extracted keywords through the interactive interface.

In operation S950, the AI device may transmit the extracted keywords to an external server for image editing. In one embodiment of the present disclosure, the AI device may output at least one of an advertisement or preconfigured information through the interactive interface while the external server is editing the images.

In operation S960, the AI device may receive edited images. Although not shown in the figure, before editing the images, the AI device may share preview images for the images to be edited with the user through the interactive interface. Further, the AI device may share the received edited images with the user through the interactive interface.

In operation S970, the AI device may receive feedback on the edited images. In one embodiment of the present disclosure, the AI device may receive feedback from the user after sharing the edited images with the user through the interactive interface. Although not shown in the figure, the AI device may re-edit the edited images based on the received feedback. Further, the AI device may store the received user feedback.

FIG. 10 is a flowchart illustrating operations performed by a controller of a server according to one embodiment of the present disclosure. Hereinafter, for simplicity, the operations performed by the controller of the external server will be described as being performed by the server.

In operation S1010, the server may receive keywords extracted by the image editing system using an interactive interface. In one embodiment of the present disclosure, the server may not simply receive the keywords extracted by the image editing system, but may receive the content of the dialog with the user through the interactive interface. In this case, the server may extract keywords from the content of the dialog with the user using its own AI interactive interface engine.

In operation S1020, the server may receive the images received by the image editing system through the interactive interface. In one embodiment of the present disclosure, the server may receive the images after the image editing system outputs a dialog for confirming the keywords for image editing through the interactive interface and the keywords are confirmed by the user.

In operation S1030, the server may edit the images based on the received keywords. In this case, the server may edit the images using the AI image editing engine thereof.

In operation S1040, the server may transmit the edited images. Further, in one embodiment of the present disclosure, the server may store the edited images in the memory thereof.

In operation S1050, the server may receive feedback on the edited images. In this operation, the server may receive feedback on the edited images from a user through an interactive interface. Further, in one embodiment of the present disclosure, the server may store the feedback on the edited images in the memory thereof.

FIG. 11 is a flowchart illustrating operations performed by a controller of an AI device according to another embodiment of the present disclosure. Hereinafter, for simplicity, the operations performed by the controller of the AI device will be described as being performed by the AI device.

In operation S1110, when a user accesses the image editing system, the AI device may output an interactive interface. In one embodiment of the present disclosure, cases where4 the user accesses the image editing system may include a case where the user accesses the URL of the image editing system on a terminal, and a case where an image editing system program or application is executed.

In operation S1120, the AI device may receive images uploaded to the interactive interface from the user. As described above, the AI device may prompt the user to upload the images through the interactive interface.

In operation S1130, the AI device may conduct, through the interactive interface, a dialog necessary to edit the images. More specifically, the AI device may organize a dialog for editing the images through the interactive interface. For example, the AI device may output a dialog for at least one editing function for editing the images. Here, the editing function may include a cut editing function, a mosaic processing function, a BGM input function, and a filter change function.

In operation S1140, the AI device may extract important keywords from the dialog with the user. More specifically, in operation S1130, the AI device may receive a dialog about the editing function from the user after outputting a dialog about the editing function. Then, the AI device may extract important keywords using an AI interactive interface engine that the device has. Accordingly, when the AI device receives keywords for an editing function through dialog with the user, it may extract and store the keywords.

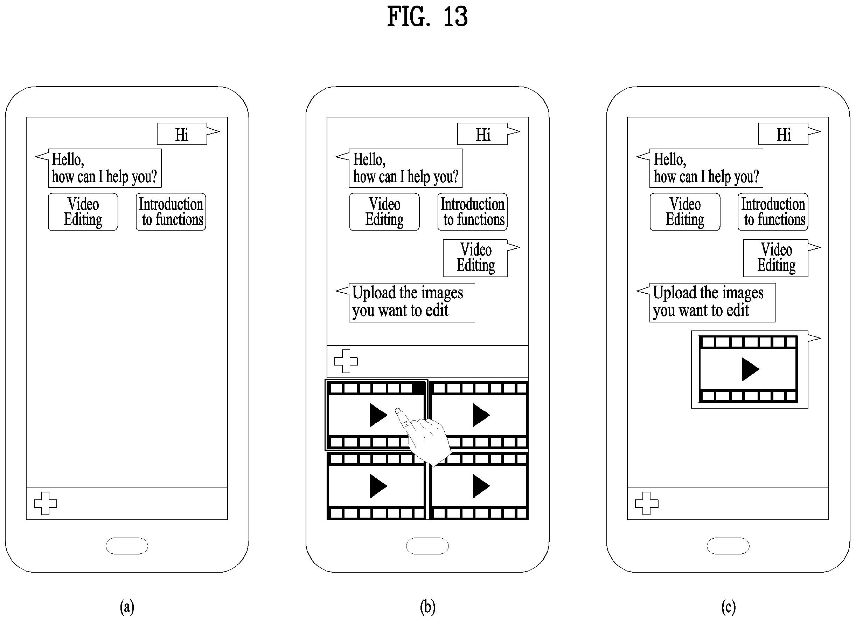

In operation S1150, the AI device may generate an image editing scenario based on the received keywords. In this context, the image editing scenario means generating a dialog with the user about how to edit images through the interactive interface. More details will be described with reference to FIGS. 13 to 19.

In operation S1160, upon receiving a confirmation of the image editing from the user based on the received keywords and the image editing scenario, the AI device may edit the images and upload the edited images to the memory. In this regard, the AI device may edit the images using an AI image editing engine that the device has.

In operation S1170, the AI device may share the edited images with the user through the interactive interface and receive feedback from the user. Thereafter, the AI device may re-edit the edited images based on the user feedback and store the received feedback in the memory.

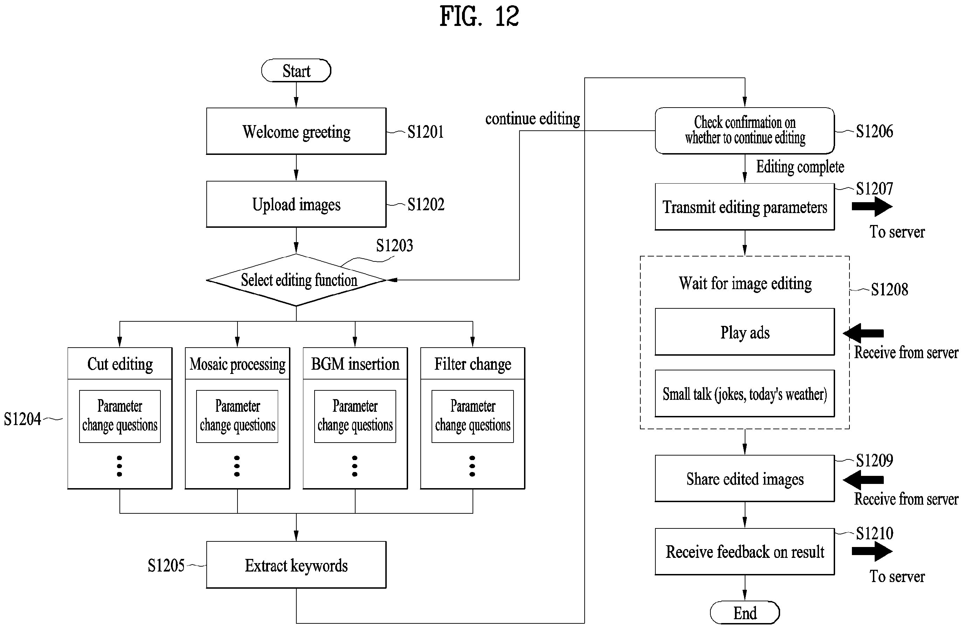

FIG. 12 is a diagram illustrating an image editing scenario according to one embodiment of the present disclosure. The image editing scenario of FIG. 12 may be carried out by the image editing system of the AI device described above. Therefore, hereinafter, it will be described that the AI device carries out the image editing scenario.

In operation S1201, when a user accesses the image editing system, the AI device may output a welcome greeting through an interactive interface.

In operation S1202, the AI device may receive images uploaded by the user through the interactive interface.

In operation S1203, the AI device may select an editing function for the images from the user through the interactive interface.

In operation S1204, the AI device may provide an editing function through the interactive interface. For example, the editing function may include a cut editing function, a mosaic processing function, a BGM insertion function, and a filter change function. In one embodiment of the present disclosure, the AI device may ask specific parameter change questions for each function. More details will be described with reference to FIGS. 13 to 16.

In operation S1205, the AI device may extract keywords for the editing function from a dialog with the user about the editing function.

In operation S1206, the AI device may receive confirmation on whether to continue to edit the images from the user through the interactive interface.

If the user wants to add an editing function to edit the images, the AI device may return to operation S1203. Then, the AI device may extract keywords for multiple editing functions.

On the other hand, if the user wants to finish the editing, the AI device may transmit the editing parameters to the server in operation S1207. As described above, the AI device can utilize its own AI video editing engine without transmitting the editing parameters to the server. However, in the following description, an embodiment of editing images on a server will be described as an example.

In operation S1208, the AI device may play an advertisement or output preconfigured information through an interactive interface while waiting for image editing. The preconfigured information may include today's weather. The AI device may receive the advertisement and the preconfigured information from the server. That is, the AI device may output at least one of the advertisement or the preconfigured information received from the server through the interactive interface.

When the image editing is completed, the AI device may share the edited images received from the server with the user through the interactive interface in operation S1209.

In operation S12010, the AI device may receive feedback on the edited images.

The image editing scenario described above with reference to FIG. 12 will be described in detail below with reference to FIGS. 13 to 19.

FIG. 13 is a diagram illustrating an example of uploading images by an image editing system according to one embodiment of the present disclosure. FIG. 13 assumes an embodiment in which the image editing system is executed on an AI device.

FIG. 13-(a) illustrates an embodiment in which a user accesses the image editing system, and FIGS. 13-(b) and 13-(c) illustrate an embodiment in which the user uploads images through an interactive interface.

Referring to FIG. 13-(a), when the user accesses the image editing system, the AI device may output an interactive interface, and may output an icon for image editing and an icon for function introduction through the interactive interface.

More specifically, the user may execute the image editing system application. In response, the AI device may output an interactive interface to output a dialog that guides the user through image editing and introduction to editing functions.

Referring to FIG. 13-(b) and 13-(c), when the user outputs a dialog corresponding to the icon for image editing, the AI device may conduct a dialog to prompt the user to upload images to be edited. Accordingly, the user may upload the images to be edited through the interactive interface. In one embodiment of the present disclosure, the user may select images stored in a general AI device using a file attachment function or may directly shoot images using a camera shooting function and upload the images.

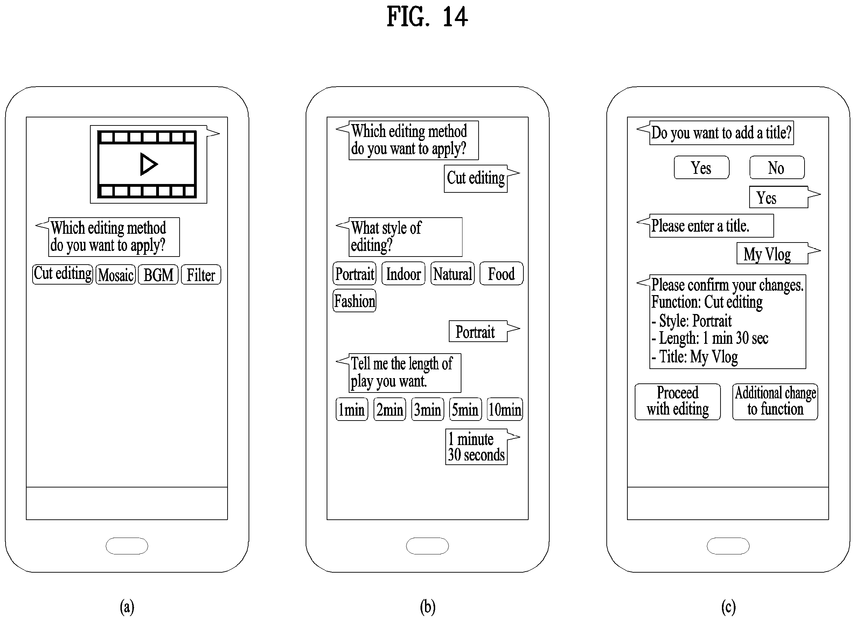

FIG. 14 is a diagram illustrating an example of a cut editing function in an image editing system according to one embodiment of the present disclosure. FIG. 14 assumes an embodiment in which the image editing system is executed on an AI device. Also, in the embodiment of FIG. 14, redundant description of elements described above will be omitted.

FIG. 14-(a) illustrates an embodiment of outputting an editing function for uploaded images, FIG. 14-(b) illustrates an embodiment of organizing a dialog about a cut editing function, and FIG. 14-(c) illustrates an embodiment of identifying a keyword for an editing function based on the extracted keyword. Here, the cut editing function may correspond to a function of analyzing and editing an important scene in images or mixing multiple images.

Hereinafter, a scenario after a user uploads images in the embodiment of FIG. 13 will be described with reference to FIG. 14.

Referring to FIG. 14-(a), in the case where the user uploads images through the interactive interface, the AI device may inquire about an editing function to apply. In this case, the AI device may inquire about an editing function for images to be edited in a dialog form through the interactive interface. Further, in one embodiment of the present disclosure, the AI device may output an icon corresponding to the editing function through the interactive interface. For example, the AI device may output icons corresponding to a cut editing function, a mosaic processing function, a BGM insertion function, and a filter change function through the interactive interface.

Referring to FIG. 14-(b), the AI device may receive a selection of the cut editing function from the user. In this case, the AI device may receive the selection of the cut editing function from the user in the form of a dialog.

In one embodiment of the present disclosure, the AI device may organize a detailed dialog about the cut editing function. In other words, the AI device may ask questions about the detailed style required to perform cut editing on the images. For example, the AI device may inquire about the style of cut editing to perform or the total length of the cut in minutes through a dialog.

In addition, in one embodiment of the present disclosure, the AI device may store the user's answers to the questions and extract keywords. That is, the AI device may extract only the keywords needed for the cut editing function from the dialog with the user.

Referring to FIG. 14-(c), the AI device may ask questions about other information needed to edit the images in addition to the cut editing function. For example, the AI device may inquire whether to add a title to the images and what the title should be.

In one embodiment of the present disclosure, the AI device may output a dialog for confirming keywords for the editing function. That is, the AI device may output to the user keywords for image editing organized through the dialog in FIGS. 13 and 14. Accordingly, the user can check whether the intended editing function has been properly reflected.

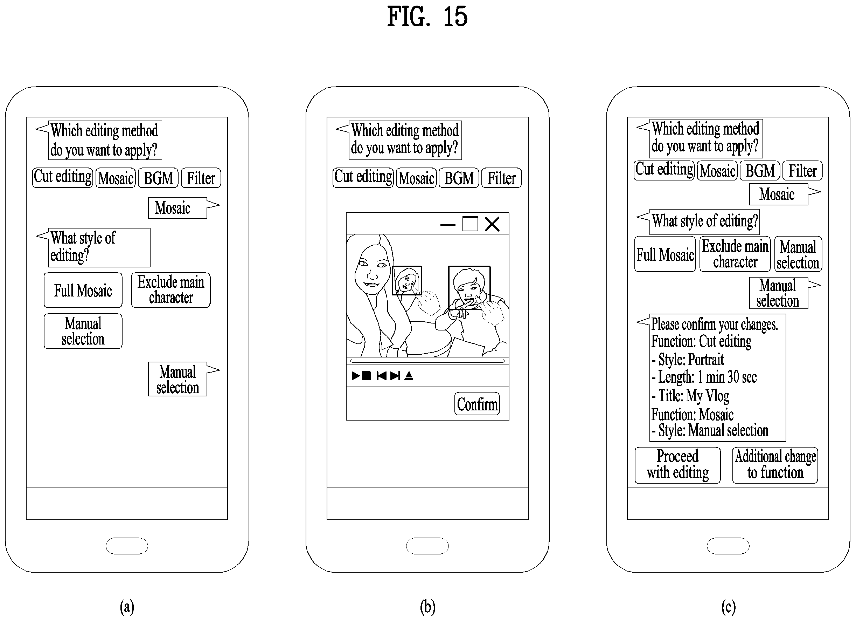

FIG. 15 is a diagram illustrating an example of a mosaic processing function in an image editing system according to one embodiment of the present disclosure. FIG. 15 assumes an embodiment in which the image editing system is executed on an AI device. Also, in the embodiment of FIG. 15, redundant description of elements described above will be omitted.

FIG. 15-(a) illustrates an embodiment of outputting an editing function for uploaded images, FIG. 15-(b) illustrates an embodiment of organizing a dialog about a mosaic processing function, and FIG. 15-(c) illustrates an embodiment of identifying a keyword for an editing function based on the extracted keyword. In the mosaic processing function, an automatic mosaic processing function for protecting portrait rights may be performed. In addition, algorithms for face extraction and analysis of a main character may be applied to the mosaic processing function.

Hereinafter, a scenario after a user uploads images in the embodiment of FIG. 13 will be described with reference to FIG. 15.

Referring to FIG. 15-(a), after the user uploads images through the interactive interface, the AI device may inquire about an editing function to apply.

In the embodiment of FIG. 15, the AI device may receive a selection of the mosaic processing function from the user. Then, the AI device may organize a detailed dialog about the mosaic processing function. For example, the AI device may ask questions about whether to fully perform the mosaic processing function, whether to perform the mosaic processing on the images except for the main character, or whether to manually select an object and perform the mosaic processing. Here, full mosaic processing refers to performing mosaic processing on all objects that appear in the images, and performing the mosaic processing on the images except for the main character refers to performing mosaic processing on all objects except for an object that appears most frequently in the images. Also, manually selecting an object and performing the mosaic processing may correspond to performing mosaic processing on only the object specified by the user. In case of manual selection and mosaic processing, a dialog about additional editing may be organized. Hereinafter, an embodiment of manual selection and mosaic processing will be described with reference to FIG. 15.

Referring to FIG. 15-(b), upon receiving a dialog about for manual selection and mosaic processing from the user, the AI device may output, through the interactive interface, a still image containing an object that can be mosaicked from the received images. In one embodiment of the present disclosure, the AI device may receive, from the user, input of an object that can be mosaicked. For example, the user may touch an object on which the user desires to perform mosaic processing in the still image.

Referring to FIG. 15-(c), the AI device may output a dialog for confirming keywords for the editing function. In other words, the AI device may output to the user keywords for image editing organized through the dialog in FIGS. 13 to 15 and output them to the user. Accordingly, the user can check whether the intended editing function has been properly reflected.

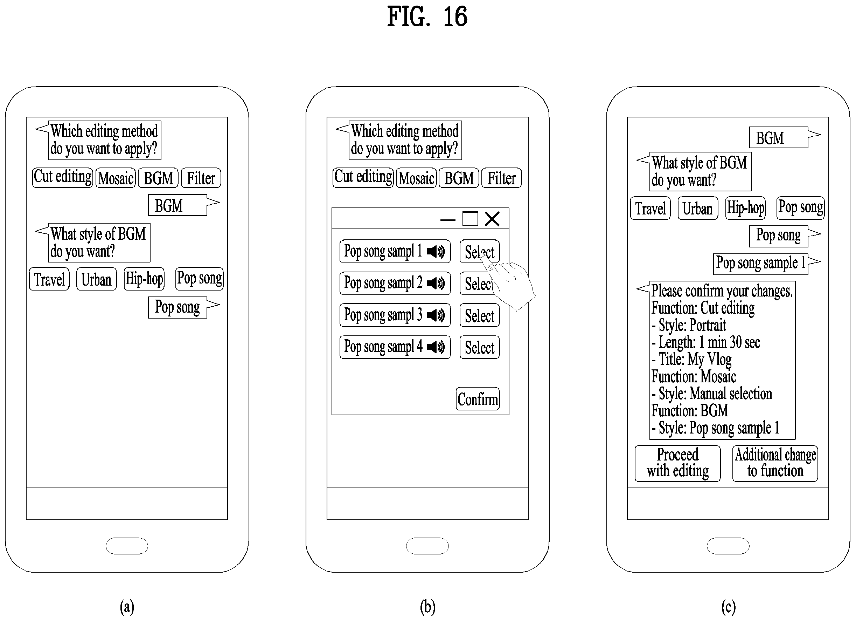

FIG. 16 is a diagram illustrating an example of a BGM insertion function in an image editing system according to one embodiment of the present disclosure. FIG. 16 assumes an embodiment in which the image editing system is executed on an AI device. Also, in the embodiment of FIG. 16, redundant description of elements described above will be omitted.

FIGS. 16-(a) to 16-(c) illustrate an embodiment in which a dialog about a BGM insertion function is organized and a keyword is confirmed by a user. In this case, the BGM insertion function may analyze the user-selected music and video, and may synchronize and automatically edit the music and video.

Referring to FIG. 16-(a), the AI device may receive a selection of the BGM insertion function for the uploaded images. Then, the AI device may organize a detailed dialog about the BGM insertion function. For example, the AI device may ask about the style of BGM to be inserted. For example, the AI device may inquire about BGM styles such as travel style, urban style, hip-hop style, and pop song style.

In other words, the AI device may suggest various styles of BGM, and the user may select BGM. In this case, the AI device may organize a dialog for additional editing.

More specifically, referring to FIG. 16-(b), when the AI device receives the pop song style as the BGM style from the user, it may provide samples of the detailed BGM style. In this operation, the AI device may newly provide a pop-up window for multiple BGM samples through an interactive interface. Additionally, the AI device may provide a preview function for the BGM samples.

Referring to FIG. 16-(c), the AI device may receive a selection of one of the BGM samples from the user. Then, the AI device may output a dialog for confirming a keyword for the BGM insertion function.

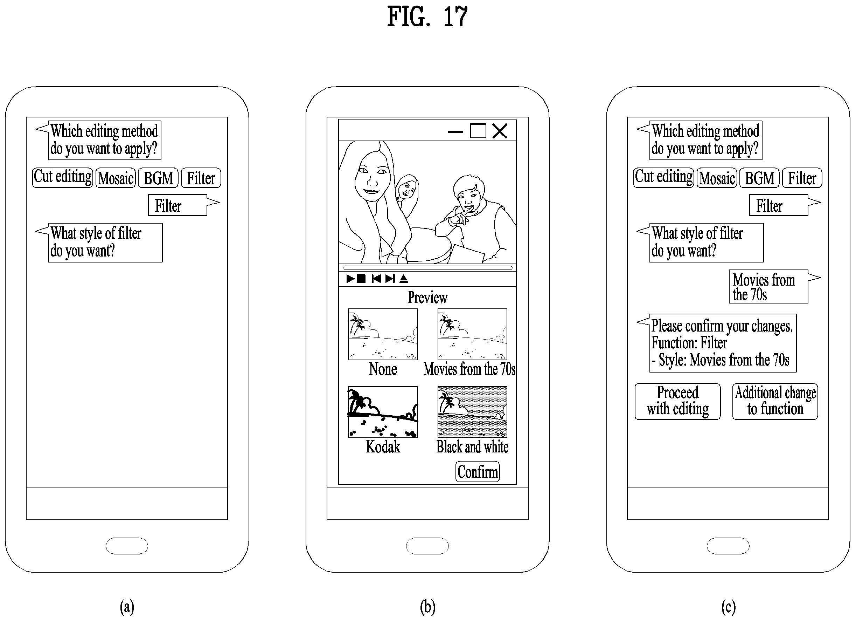

FIG. 17 is a diagram illustrating an example of a filter change function in an image editing system according to one embodiment of the present disclosure. FIG. 17 assumes an embodiment in which the image editing system is executed on an AI device. Also, in the embodiment of FIG. 17, redundant description of elements described above will be omitted.

FIGS. 16-(a) to 16-(c) illustrate an embodiment in which a dialog about the filter change function is organized and a keyword is confirmed by a user. In this case, the filter change function may provide filters preferred by the user, and may recommend a suitable filter after analyzing the theme and mood of the video.

Referring to FIG. 17-(a), the AI device may receive a selection of the filter change function for the uploaded images. Then, the AI device may organize a detailed dialog for filter selection. For example, the AI device may suggest multiple styles of filters. In this case, the AI device may output an additional pop-up window to suggest multiple styles of filters. At this time, the AI device may provide samples of the filter styles and provide a preview function.

More specifically, referring to FIG. 17-(b), the AI device may provide sample filters related to the multiple filter styles through an interactive interface. When the user selects one sample filter style, the AI device may provide a preview function for the filter sample selected for the images.

Referring to FIG. 17-(c), when the user selects one sample filter style, the AI device may output a dialog for confirming the keyword for the filter change function.

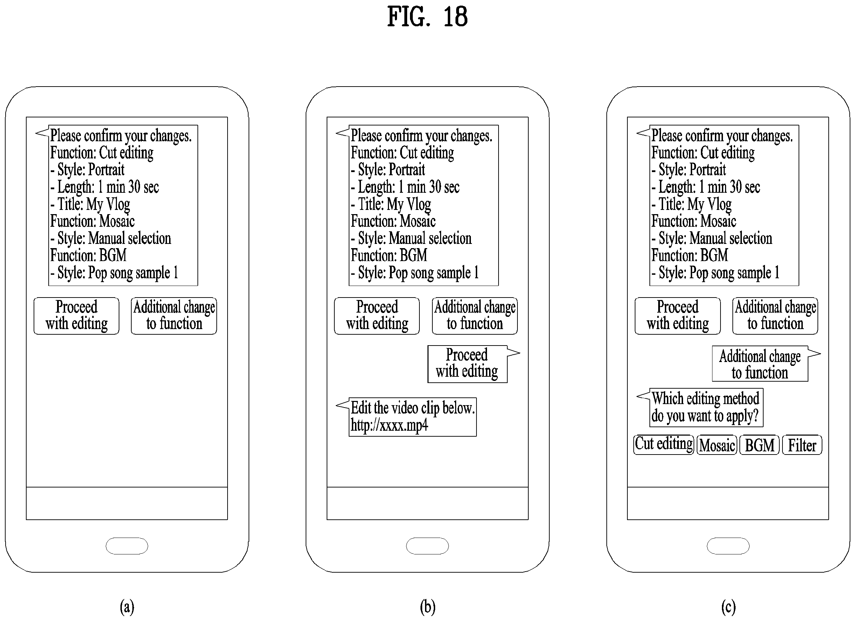

In the embodiments of FIGS. 14 to 17, the AI device may extract a keyword for one editing function, output the keyword to the user, and then ask the user whether to continue to apply another editing function or to apply the current editing function to edit the images. Details will be described with reference to FIG. 18.

In addition, in the method for the user to select the detailed editing function, FIGS. 14 to 17 illustrate that the user touches a part of the output interactive interface, but the user may select the detailed editing function through voice input.

FIG. 18 is a diagram illustrating an example of editing or additional editing by an image editing system according to one embodiment of the present disclosure. FIG. 18 assumes an embodiment in which the image editing system is executed on an AI device. Also, in the embodiment of FIG. 18, redundant description of elements described above will be omitted.

FIG. 18-(a) illustrates an embodiment of checking whether to perform editing, FIG. 18-(b) illustrates an embodiment of performing editing, and FIG. 18-(c) illustrates an embodiment of performing re-editing. In other words, the embodiment of FIG. 18 assumes that the AI device has organized and output the extracted keywords for the editing function selected by the user in the embodiments of FIGS. 14 to 17.

Referring to FIG. 18-(a), the AI device may output information summarizing keywords for editing images through an interactive interface. Additionally, the AI device may extract and output keywords for one editing function and then ask whether to continue applying another editing function or to apply the current editing function to edit the images.

FIG. 18-(b) illustrates an embodiment of editing images by applying the current editing function, and FIG. 18-(c) illustrates an embodiment of continuing to apply another editing function by selecting an additional editing function.

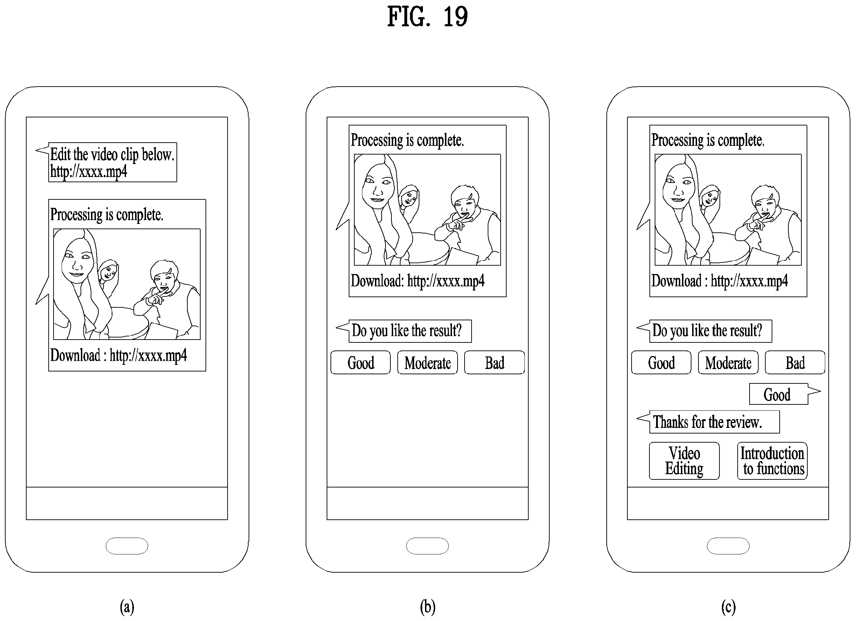

Specifically, referring to FIG. 18-(b), when the AI device receives, from the user, a dialog about editing the images by applying the current editing function, it may edit the images based on the currently extracted keyword. At this time, as described above, the AI device may output an advertisement or preconfigured information while the images are being edited. A scenario after the images are edited will be described in detail with reference to FIG. 19.

Referring to FIG. 18-(c), when the AI device receives, from the user, a dialog about selecting an additional editing function, it may organize a dialog about the editing function as shown in FIGS. 14 to 17-(a).

FIG. 19 is a diagram illustrating an example of receiving feedback by an image editing system according to one embodiment of the present disclosure. FIG. 19 assumes an embodiment in which the image editing system is executed on an AI device. Also, in the embodiment of FIG. 19, redundant description of elements described above will be omitted.

FIG. 19-(a) illustrates an embodiment of receiving results, FIG. 19-(b) illustrates an embodiment of requesting feedback, and FIG. 19-(c) illustrates an embodiment of receiving feedback.

Referring to FIG. 19-(a), after the editing of the images is completed, the AI device may output the edited images through an interactive interface. In one embodiment of the present disclosure, the AI device may directly output the edited images and share the same with the user through the interactive interface. Additionally, the AI device may share the URL corresponding to the edited images. Additionally, the AI device may store the edited images in a memory.

Referring to FIG. 19-(b), after sharing the edited images with the user, the AI device may request feedback on the edited images.

Referring to FIG. 19-(c), after receiving feedback on the edited images, the AI device may return to the start of the image editing. Then, the AI device may store the feedback on the edited images in the memory and use the same as information for the next images to be edited.

The scenarios described above with reference to FIGS. 13 to 19 may be carried out not only by an AI device including an AI interactive interface engine and an AI image editing engine, but also by an AI device that transmits and receives data to and from a separate cloud server including an AI interactive interface engine and an AI video editing engine.

Therefore, even users without professional knowledge in image editing are allowed to easily edit images.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the terminal. The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

### [Industrial Applicability]

Embodiments of the present disclosure can be repeatedly carried out by an artificial intelligence device.

## Claims

1. An artificial intelligence device comprising:
a communication unit configured to communicate with an outside;
an input/output (I/O) unit configured to receive a signal from a user and output a processing result; and
a controller,
wherein the controller is configured to:
based on an image editing system being accessed by the user, output an interactive interface for a dialog with the user;
receive images uploaded by the user through the interactive interface;
output a dialog about editing of the images through the interactive interface;
extract, from the dialog, a keyword for editing of the images; and
edit the images based on the extracted keywords.

2. The artificial intelligence device of claim 1, wherein, based on accessing the image editing system by the user, the controller receives information about the user and outputs, based on the information about the user, the dialog about editing of the images through the interactive interface.

3. The artificial intelligence device of claim 1, wherein the controller outputs, through the interactive interface, a dialog about at least one editing function for editing of the images,
wherein the editing function comprises a cut editing function, a mosaic processing function, a background music (BGM) input function, and a filter change function.

4. The artificial intelligence device of claim 3, wherein, based on a dialog about a first editing function being received from the user, the controller extracts a keyword from the dialog about the first editing function.

5. The artificial intelligence device of claim 4, wherein the controller outputs, through the interactive interface, a dialog about confirmation of a keyword for the first editing function.

6. The artificial intelligence device of claim 4, wherein, based on a dialog about a second editing function being received from the user after extracting the keyword from the dialog about the first editing function, the controller extracts a keyword from the dialog about the second editing function.

7. The artificial intelligence device of claim 5, wherein the controller outputs a dialog for confirmation of the keyword for the first editing function and the keyword for the second editing function through the interactive interface.

8. The artificial intelligence device of claim 1, wherein the controller shares, through the interactive interface, a preview image for the images to be edited based on the keyword with the user.

9. The artificial intelligence device of claim 1, wherein the controller shares the edited images with the user through the interactive interface.

10. The artificial intelligence device of claim 1, wherein the controller receives feedback from the user after sharing the edited images with the user.

11. The artificial intelligence device of claim 10, wherein the controller re-edits the edited images based on the received feedback.

12. The artificial intelligence device of claim 10, wherein the controller stores the received feedback.

13. The artificial intelligence device of claim 1, wherein the controller outputs at least one of an advertisement or preconfigured information through the interactive interface while editing the images.

14. The artificial intelligence device of claim 1, wherein, in editing the images based on the extracted keyword, the controller edits the images through the communication unit using an external server.

15. The artificial intelligence device of claim 1, further comprising a memory,
wherein the controller stores the edited images in the memory.

16. The artificial intelligence device of claim 1, wherein the controller edits the images using artificial intelligence technology.

17. A method of operating an artificial intelligence device, the method comprising:
based on an image editing system being accessed by a user, outputting an interactive interface for a dialog with the user;
receiving images uploaded by the user through the interactive interface;
outputting a dialog about editing of the images through the interactive interface;
extracting, from the dialog, a keyword for editing of the images; and
editing the images based on the extracted keywords.
